(19) Europäisches Patentamt
European Patent Office
Office européen des brevets

(11) **EP 2 669 799 A1**

(12) **EUROPEAN PATENT APPLICATION**

(43) Date of publication:
**04.12.2013 Bulletin 2013/49**

(51) Int Cl.:
***G06F 9/50*** (2006.01)

(21) Application number: **12305616.0**

(22) Date of filing: **01.06.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventors:
• **An, Xueli
2000 Antwerpen (BE)**

• **Vermeulen, Jonas
2000 Antwerpen (BE)**
• **Spruyt, Ken
2340 Vlimmeren (BE)**
• **Rits, Olivier
9840 De Pinte (BE)**

(74) Representative: **D'Halleweyn, Nele Veerle Trees
Gertrudis et al
Arnold & Siedsma
Sweelinckplein 1
2517 GK Den Haag (NL)**

(54) **Method and system for provisioning a software-based service**

(57)  A method for provisioning a software-based service over a cloud infrastructure, the method comprising at a brokerage system receiving a request for instantiation of a software-based service; determining performance requirements for said service; deriving cloud configuration parameters based on said performance requirements; and configuring said cloud infrastructure based on said cloud configuration parameters; wherein said cloud configuration parameters include network configuration parameters; and wherein configuring said cloud infrastructure includes configuring said network based on said network configuration parameters.

## Description

### Field of the Invention

The present invention relates to the field of cloud computing, and in particular to the field of service provisioning in cloud infrastructures.

### Background

Cloud computing has emerged in the past few years as an IT paradigm in which the infrastructure, the platform, and even the software used by IT operations are outsourced services. The "pay-as-you-go" cloud resource usage model reduces the upfront investment for purchasing resources such as hardware equipment and software, and reduces the IT deployment and maintenance overhead.

Current clouds present several problems which make it difficult for over-the-top cloud providers to support Service Level Agreement (SLA) critical services: the-end-to end SLA is difficult to guarantee, because the delivery of cloud service relies on the public Internet; the physical platform underlying commercial clouds is time-shared among all cloud customers, implying that services of multiple users may concurrently run on the same physical resource, such that the Quality of user Experience (QoE) is impacted by both computation resource allocation and placement; the QoE of cloud services highly depends on the performance of the customer's access network; and services increasingly rely on low latency to function properly, while the location of cloud resources is often far from users, in places where data centers (DCs) can be operated cheaply.

### Summary

Various embodiments provide a method and system of providing a CSB with network feature awareness that provides improved service level compliance.

In a first embodiment, there is provided a method for provisioning a software-based service over a cloud infrastructure including a network, the method comprising at a brokerage system: receiving a request for instantiation of a software-based service; determining performance requirements for the service; deriving cloud configuration parameters based on the performance requirements; and configuring the cloud infrastructure based on the cloud configuration parameters; wherein the cloud configuration parameters include network configuration parameters; and wherein configuring the cloud infrastructure includes configuring the network based on the network configuration parameters.

Without intent to limit the scope, the system will hereinafter be referred as a networked cloud service brokerage (N-CSB) platform.

Advantageously, adequate network configuration may be provided subsequent to a new cloud service being requested. As a result of this approach, performance problems which may be associated with a poorly adapted network infrastructure may be proactively avoided. A predetermined set of rules may be used to determine the performance requirements for a service, instead of or in addition to customer-defined performance requirements. A predetermined set of rules may  be used to derive the cloud configuration parameters for the determined performance requirements.

In an embodiment, the method further comprises determining whether a performance of the network complies with the performance requirements; and generating a non-compliance signal if the verifying indicates that the network does not comply with the performance requirements.

Advantageously, compliance information based on the non-compliance signal may be made available to the system or user after the initial provisioning of the cloud-based service. This enables the system or user to analyze the occurrence of the non-compliance, and to take adequate corrective action if this is deemed necessary.

In a particular embodiment, the method further comprises: updating the network configuration parameters based on the non-compliance signal.

It is an advantage of this embodiment, that a reactive problem resolution approach is added to the proactive approach of the invention.

In a more particular embodiment of the method, the verifying, the conditional generating of the signal, and the updating in response to the signal, are performed repeatedly.

It is an advantage of this embodiment that the performance of the provisioned service can be guaranteed throughout the lifetime of the application, by making the necessary updates to network configuration when necessary. Guaranteed  provisioned service is particularly useful in shared infrastructures, because the load on the infrastructure may change between the moment at which the service is provisioned, and the period during which the service is actually used.

In another embodiment, the method comprises: storing an association between the derived cloud configuration parameters and results pertaining to the performance verification in a database; and using the stored association as input in the deriving of the cloud configuration parameters for further service instantiation requests.

It is an advantage of this embodiment that the system automatically learns which configuration works best to provide a certain level of performance to a certain service. This feature may be used in addition to the predetermined set of rules, in which case the rules are used to bootstrap the learning mechanism.

In an embodiment of the method, the cloud configuration parameters comprise one or more of a number of software instances, a topological distribution of software instances, an allocation of resources to software instances, and a redundancy factor.

It is an advantage of this embodiment that the system makes optimal use of the available IT-related parameters to configure the cloud infrastructure.

In an embodiment of the method, the network configuration parameters comprise one or more of a bandwidth allocation, a data transmission priority scheme, and a redundancy factor.

It is an advantage of this embodiment that the system makes optimal use of the available datacom-related parameters to configure the cloud infrastructure, in particular the network parameters.

It should be appreciated that steps of various methods described herein may be performed by programmed computers. Herein, some embodiments are also intended to cover program storage devices, e.g., data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable data storage media. The embodiments are also intended to cover computers programmed to perform said steps of the methods described herein.

According to an embodiment, there is provided a computer program comprising software means configured to carry out the method as described above. The software means are understood to include the programs of instructions as defined in the preceding paragraph.

In some embodiments, a system is provided for providing a network-enabled cloud service brokerage system for provisioning a software-based service over a cloud infrastructure including a network, the system comprising: a service request interface for receiving a request for instantiation of a software-based service; a processor, operatively connected to the service request interface, configured to determine performance requirements for the service and to deriving cloud configuration parameters in function of the performance requirements; and an infrastructure management agent, operatively connected to the processor and to a management interface of the cloud infrastructure, the infrastructure management agent being configured to configure the cloud infrastructure according to the cloud configuration parameters; wherein the cloud configuration parameters include network configuration parameters; and wherein configuring the cloud infrastructure includes configuring the network according to the network configuration parameters.

In an embodiment of the system, the infrastructure management agent is further configured to verify whether a performance of the network complies with the performance requirements and to send a non-compliance signal to the processor if the verifying indicates that the network does not comply with the performance requirements.

In a particular embodiment of the system, the processor is further configured to update the network configuration parameters in response to the non-compliance signal.

In a more particular embodiment of the system, the infrastructure management agent is configured to perform the verifying and the conditional generating of the signal repeatedly.

In an embodiment, the system further comprises a data storage, the system being configured to store an association between the derived cloud configuration parameters and results pertaining to the performance verification in a database; and the processor is further configured to use the stored association as input in the deriving of the cloud configuration parameters for further service instantiation requests.

In an embodiment of the system, the cloud configuration parameters comprise one or more of a number of software instances, a topological distribution of software instances, an allocation of resources to software instances, and a redundancy factor.

In an embodiment of the system, the network configuration parameters comprise one or more of a bandwidth allocation, a data transmission priority scheme, and a redundancy factor.

The technical effects and advantages of embodiments of the computer program and system according to the present invention correspond, *mutatis mutandis,* to those explained above for the corresponding embodiments of the method according to the present invention.

**Brief Description of the Figures**

Some embodiments of apparatus or methods in accordance with embodiments of the present invention are now described, by way of example only, and with reference to the accompanying drawings, in which:

Figure 1 schematically represents a basic brokerage platform;

Figure 2 schematically represents a network feature enabled cloud service brokerage platform;

Figure 3 provides a flow chart of exemplary cloud services management in N-CSB;

Figure 4 provides a flow chart indicating the interaction between brokerage platform and network enablement module;

Figure 5 provides an SLA management flow chart;

Figure 6 provides a generalized flow chart of a method according to an embodiment of the present invention; and

Figure 7 provides a generalized schematic composition of a system according to an embodiment of the present invention.

**Description of Embodiments**

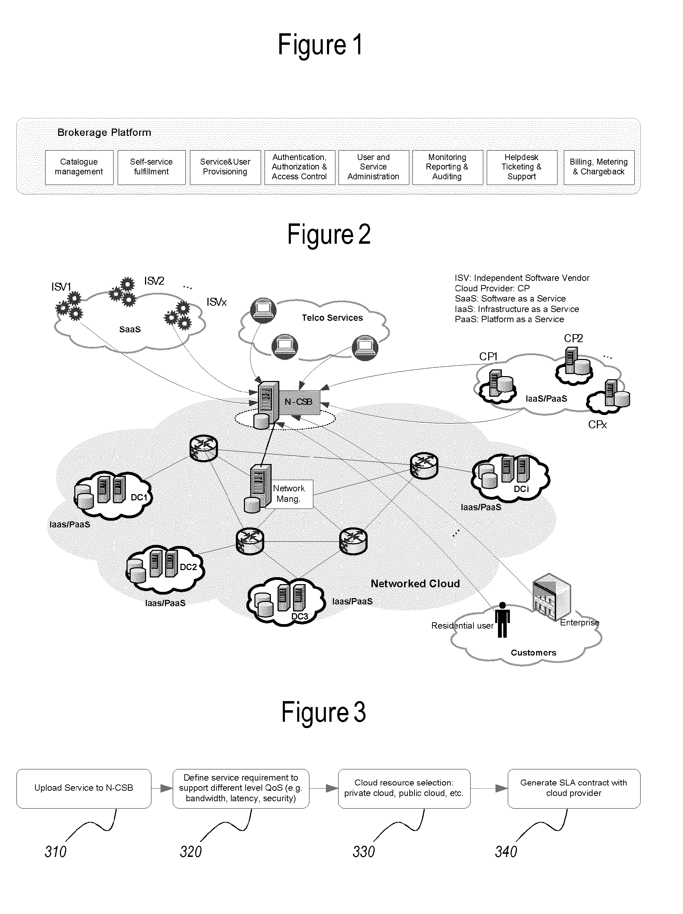

The typical functions offered by a basic CSB platform are depicted in Figure 1. Typical functions may include one or more of service catalogue management; a self-service fulfillment module; service and user provisioning means; AAA functions; user and service administration; monitoring; reporting and auditing; helpdesk ticketing and support; and billing, metering and charge-back. Thus, a user may use a conventional CSB platform to determine which service(s) from those listed in the catalogue meets the needs of the user (using the catalogue management function) and to order the most appropriate service (using the self-fulfillment module), whereupon the service provider may provision the service for the user at the level of allocating the required IT equipment (using the service and user provisioning means), provide operational access to the user (using the AAA functions), and perform all conventional functions that take place when the service is up and running (monitoring, reporting, support, and accounting; using the respective dedicated modules). Service provisioning is limited to the IT side of the service (i.e., provisioning CPU, RAM, or storage, and instantiating software modules), and is not concerned with network configuration issues.

Embodiments provide a network feature enabled cloud service brokerage platform (N-CSB). The N-CSB bundles control over the communication network together with the cloud operators' products, which brings network differentiators into cloud brokerage platforms.

The location of cloud resources is often distant from users, in places where DCs can be operated cheaply. This distance between cloud resources and users may cause significant performance penalties for latency-sensitive services (e.g., online gaming, networked virtual worlds, interactive image processing, etc.). Additionally, a cloud service which requires high bandwidth (e.g. virtual desktop infrastructure, teleconference, and analytics for big data processing) might not work properly, if the access network's bandwidth is not high enough (especially for using radio access network for the last hop connection). The methods and systems according to embodiments provide a coupling between the requirements of the cloud service and the configuration parameters of the underlying network, to overcome these and similar problems.

Figure 2 provides a high level schematic illustration of an exemplary scenario, in which a networked cloud scheme is considered. The networked cloud scheme adopts a distributed data center architecture, in which multiple data centers are inter-connected to each other. The network management of a networked cloud can be done for instance using the Alcatel-Lucent CloudBand™ platform.

Accordingly, the N-CSB may be considered as an intermediate layer between cloud services and communication networks.

An exemplary N-CSB architecture according to an embodiment will now be described with reference to two main components: the brokerage platform and network enablement module.

The brokerage platform is preferably run on a mediator server. This platform has basic brokerage functionalities as already shown in Figure 1. In addition, the N-CSB provides advanced brokerage functionalities, which includes service offering with network feature enablement and service performance assurance.

In an exemplary application, service providers interact with this brokerage platform via an N-CSB portal.

Figure 3 illustrates an exemplary flow carried out in the N-CSB to manage cloud services. In step **310,** the service provider creates an instance for their provided service in the service catalogue of N-CSB. In step **320,** the network and computing resource requirements to run the service in different level of QoS are defined by the service provider, for instance: security requirements (e.g., none, low or high), network bandwidth (e.g., a specific minimum amount), transmission latency (e.g., a specific maximum), etc. If a service provider (e.g. SME) does not have his own infrastructure to run the service, in step **330** the SME may also select a cloud provider to hold his service. The cloud resource can be a private cloud, a public cloud or a hybrid cloud. In step **340,** the service provider needs to negotiate and generate SLA contract with the corresponding cloud provider.

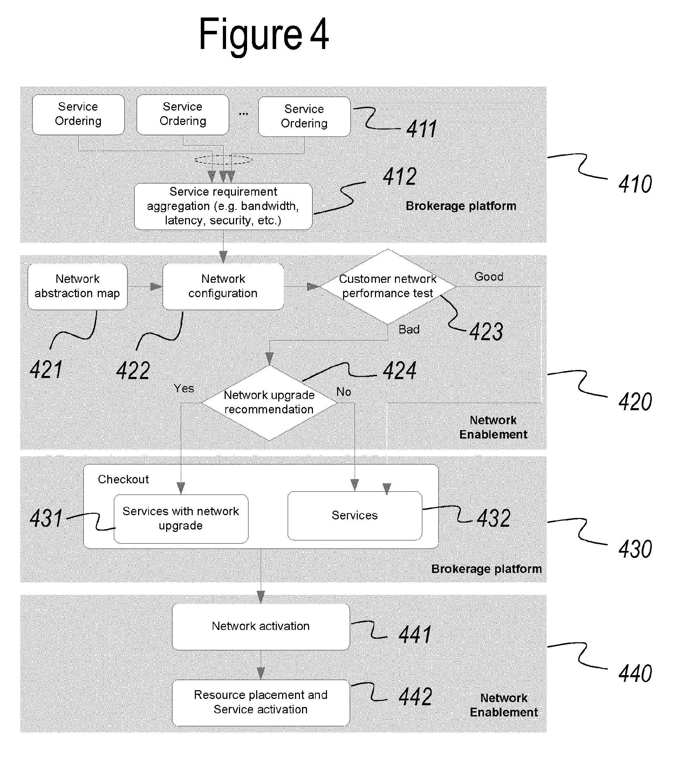

The network enablement module maps cloud services onto network capabilities. Figure 4 provides a flow chart which illustrates a procedure of network configuration and activation after service ordering. In step **411,** a customer orders a bundle of services, whereupon all the service requirements defined by the service providers are aggregated **412** within a single requirement (e.g. RA) with multiple arguments: RA = [bandwidth, latency, security level].

In step **422,** the initial network configuration is calculated according to the network abstraction map **421** in accordance with the aggregated service requirement RA, which contains the network topology and each DC's computing capability (e.g. CPU, memory, storage, etc.). The network abstraction map is provided by the network management layer as indicated in Figure 2.

Configuration of the network implies placing the service and planning the right amount of computing resources (i.e. CPU, memory and storage).

In step **423,** the performance of customer's access network is tested to verify if the current network is capable of adequately supporting the services. If the network performance is not good enough, a network upgrade recommendation **424** is generated by N-CSB.

If the customer agrees on the network upgrade, the network will be activated **431** for the customers and the services will be placed in the selected DCs **441-442** after checkout. By using this approach, N-CSB provides the upfront indication of network readiness to run cloud services.

Service performance assurance may optionally also be triggered in the service usage phase. An SLA-based network and computing resource configuration framework may be provided in the N-CSB network enablement module. Preferably, his framework negotiates SLA between multiple partners, monitors and reports service performance, and also adjusts network configuration and computing resource placement according to the current monitored SLA.

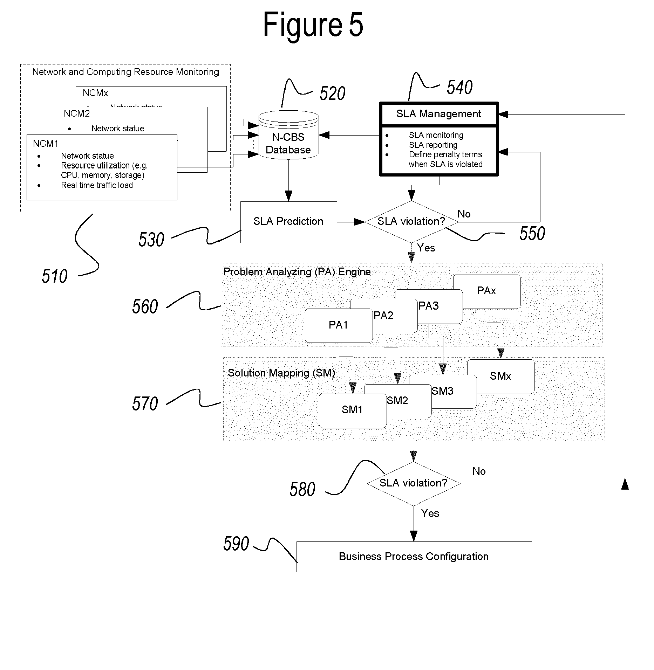

An exemplary SLA-based network adaptation flow chart is shown in Figure 5, which enables end-to-end SLA management from the application across the network to the actual delivery. The various illustrated steps are exemplary, and may be deployed in different combinations. If an SLA violation is detected **550,** a Problem Analyzing (PA) engine **560** may be triggered to analyze the reason of SLA violation, which can be caused by multiple factors (e.g., network constraints or cloud infrastructure constraints). After analysis **560** of the problem, a solution is proposed **570** for the problem. For instance, if the SLA violation is attributed to network congestion, a new routing path will be proposed.

If the problem cannot be solved by selecting a different routing path, the service placement algorithm will be triggered to select a new location to place the service.

An exemplary service placement algorithm may identify all devices having the capability to provide the required resource, and compute a weight value for each potential device for providing the resources. The algorithm may then include computing each weight according to an equation such as:

$$w(i) = N(r) \left[ L(r) - \sum_{t \in T(r)} \delta(i,t) \right]$$

where w(i) represents the calculated weight of allocating the resource at cloud device i, N(r) represents the number of resources requested by the current resource allocation request r, $L(r)$ represents the length of time for which the resources are requested by request r, and T(r) represents the set of time slots t for which the resources are requested by request r. A variable delta value associated with the cloud device i, represented above as $\delta(i,t)$ may be used. Preferably, each cloud device i is associated with a different delta value for each time slot t. The delta value may be modified each time resources are allocated to a cloud device for a time slot. After computing the weight for each cloud device, the cloud device that is associated with the greatest calculated weight may be selected to provide the requested resource.

If the SLA violation is attributed to the inadequacy of the allocated computing resource capacity, the computing resources will be scaled out within one DC or among multiple DCs. Likewise, due to the user's mobility, the initial allocated service location might not be optimal over time, which may result in SLA violations in respect of latency. In this case, the service placement algorithm will be triggered again.

If the SLA violation cannot be resolved by network or resource configuration **580,** a business process reconfiguration may be triggered **590.** The business process reconfiguration **580** may include subcontracting the service to a third party, proposing alternative service offers to the customers, or the like.

Various sorts of data traces (e.g. traffic load, cloud resource utilization ratio, service response time, etc.) may be collected using conventional network or application monitoring systems **510.** These history data traces together with SLA reports are kept in the database **520** of the N-CSB. The data may be collected for the purpose of analytics, which may be used to model network service behavior and forecast traffic load **530.** This information may be used to prevent SLA breaches in advance.

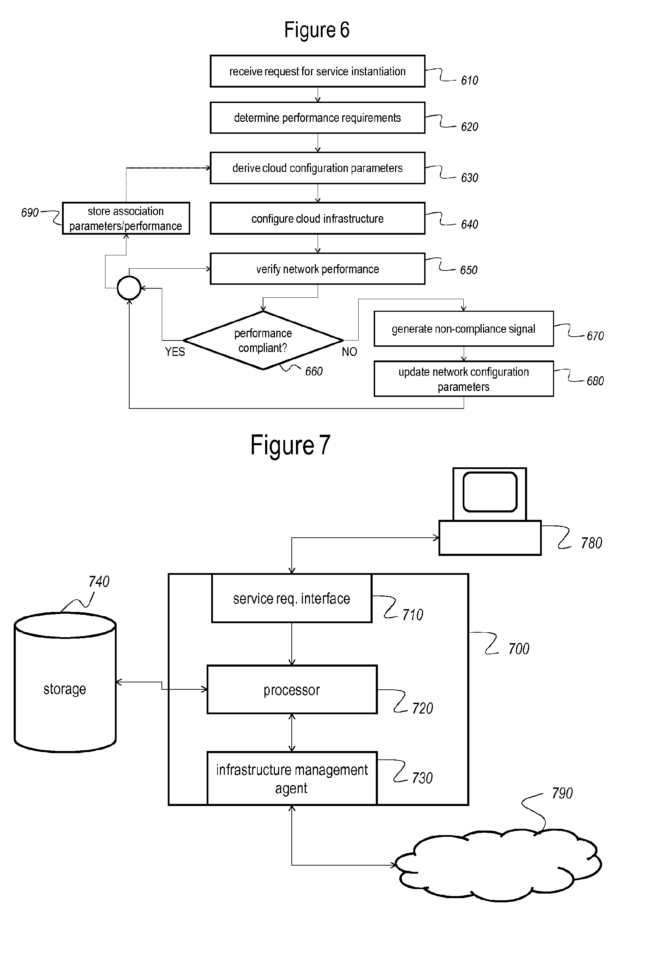

Figure 6 provides a generalized flow chart of a method according to an embodiment. It will be clear to the reader that various illustrated steps are generalized forms of the functional steps described above in connection with Figures 4 and 5. The optional features that have been explained above may be applied to the generalized method individually or in any combination.

With reference to Figure 6, the method for provisioning a software-based service over a cloud infrastructure including a network comprises, at an N-CSB, the step of receiving 610 a request for instantiation of a software-based service. It will be understood that a system will generally be deployed so as to be permanently available for new service instantiation requests. The illustrated method is therefore  implicitly repetitive, in that each new incoming request would trigger performance of the illustrated steps.

The method further includes the step of determining 620 performance requirements for the requested service. A predetermined set of rules may be used to determine the performance requirements for a requested service, instead of or in addition to customer-defined performance requirements. The performance requirements may further be derived by aggregating performance requirements pertaining to partial services comprised in the requested service, optionally using statistical concentration factors to ensure optimal use of the infrastructure.

The method further includes the step of deriving 630 cloud configuration parameters based on the performance requirements. A predetermined set of rules may be used to derive the cloud configuration parameters for the determined performance requirements. Alternatively or additionally, this step may take into account known parameter/performance relationship stored 690 previously as a result of performance monitoring carried out in respect of previously instantiated services. The cloud configuration parameters include network configuration parameters.

The method further includes the step of configuring 640 the cloud infrastructure according to the cloud configuration parameters. The cloud configuration parameters may comprise *inter alia* the number of software instances, the topological distribution of software instances, the allocation of resources to software instances, or the applied redundancy factor. The configuration step 640 includes configuring the network according to the network configuration parameters.

The network configuration parameters may comprise *inter alia* the bandwidth allocation, the data transmission priority scheme, or the redundancy factor

Preferably, the method further comprises the steps of verifying 650 whether a performance of the network complies with the performance requirements determined in step 620, and generating 670 a non-compliance signal if the verifying 650 indicates that the network does not comply with the performance requirements. Preferably, the network configuration parameters are updated 680 in response to the non-compliance signal 670. These steps 660-680 are preferably performed repeatedly, to provide permanent follow-up of the actual performance.

The method preferably operates at a level of abstraction above that of the typical network engineer. In embodiments, it is capable of collecting information from all the active applications, and to minimize the impact of the total SLA penalty by making informed performance trade-offs. It can thus be avoided to take decisions to resolve individual problems, which might in fact worsen the combined weight of occurring SLA violations. Hence, the N-CSB preferably works from an SLA-driven point of view. At an economical level, this approach ensures that the liability of the operator for SLA violation penalties is minimized. Accordingly, updating step 680 preferably includes assessing the impact of changed network configuration parameters on other running services - this requires a mapping of the proposed network parameters onto service performance (the opposite determination of the one done at step 630, which may use the same rules). Most preferably, an assessment is done, sequentially or in parallel, for several alternative update scenarios, and  updated performance parameters are selected in view of jointly optimizing performance for all running services. The joint optimization process may be performed by algorithms that are known to the person skilled in the art. The cost function may be the overall SLA violation penalty that results from the (expected) performance under the proposed updated parameters.

Figure 7 provides a generalized schematic composition of a system (N-CSB) according to an embodiment of the present invention.

The N-CSB 700 for provisioning a software-based service over a cloud infrastructure including a network, comprises a service request interface 710 for receiving a request for instantiation of a software-based service; a processor 720, operatively coupled to the service request interface 710, configured to determine performance requirements for the service and to derive cloud configuration parameters in function of the performance requirements; and an infrastructure management agent 730, operatively coupled to the processor 720 and to a management interface of the cloud infrastructure 790, the infrastructure management agent 730 being configured to configure the cloud infrastructure 790 according to the cloud configuration parameters. As indicated before, the cloud configuration parameters include network configuration parameters; and the configuring of the cloud infrastructure 790 includes configuring the network according to the network configuration parameters.

The infrastructure management agent 730 may further be configured to verify whether a performance of the network complies with the performance requirements and to send a  non-compliance signal to the processor 720 if the verifying indicates that the network does not comply with the performance requirements.

The processor 720 may further be configured to update the network configuration parameters in response to the non-compliance signal. The infrastructure management agent 730 may be configured to perform the verifying and the conditional generating of the signal repeatedly.

The system may comprise a data storage **740,** in which the system stores associations between the derived cloud configuration parameters and results pertaining to the performance verification in a database. Thus, knowledge about the correlation between network parameters and service performance is progressively developed. The processor **720** is then further configured to use the stored association as input in the deriving of the cloud configuration parameters for further service instantiation requests.

The term "interface" designates the necessary hardware and software required to establish data communication connectivity across the various layers of the protocol stack, as is well known to a person skilled in the art. Preferably, standardized protocols are used. An access interface may for instance include an interface for an xDSL, xPON, WMAN, or 3G link. A LAN interface may for instance include an interface for one or more of an IEEE 802.3 "Ethernet" link, an IEEE 802.11 "Wireless LAN" link. A PAN interface may for instance include a USB interface or a Bluetooth interface. Internal interfaces between components of the same apparatus may include hardware connections and software APIs as are known to the person skilled in the art.

Although methods and apparatus have been described hereinabove as separate embodiments, this is done for clarity purposes only, and it should be noted that features described only in connection with method embodiments may be applied in the apparatus according to the present invention to obtain the same technical effects and advantages, and vice versa.

The term, "or," as used herein, refers to a non-exclusive or, unless otherwise indicated (e.g., "or else" or "or in the alternative").

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for provisioning a software-based service over a cloud infrastructure, the method comprising at a brokerage system:

   - receiving a request for instantiation of a software-based service;
   - determining performance requirements for said service;
   - deriving cloud configuration parameters based on said performance requirements; and
   - configuring said cloud infrastructure based on said cloud configuration parameters;

   wherein said cloud configuration parameters include network configuration parameters; and wherein configuring said cloud infrastructure includes configuring said network based on said network configuration parameters.

2. The method according to claim 1, further comprising:

   - determining whether a performance of said network complies with said performance requirements;
   - generating a non-compliance signal if said verifying indicates that said network does not comply with said performance requirements.

3.  The method according to claim 2, further comprising:

    - updating said network configuration parameters based on said non-compliance signal.

4.  The method according to any of claims 2-3, further comprising:

    - storing an association between said derived cloud configuration parameters and results pertaining to said performance verification in a database; and
    - using said stored association as input in said deriving of said cloud configuration parameters for further service instantiation requests.

5.  The method according to any of the preceding claims, wherein said cloud configuration parameters comprise one or more of a number of software instances, a topological distribution of software instances, an allocation of resources to software instances, and a redundancy factor.

6.  The method according to any of the preceding claims, wherein said network configuration parameters comprise one or more of a bandwidth allocation, a data transmission priority scheme, and a redundancy factor.

7.  A computer program comprising software means configured to carry out the method according to any of the preceding claims.

8.  A computer readable storage means comprising instructions that, when executed, cause a processor to perform the method of any of claims 1-6.

9.  An apparatus comprising a computer readable storage means according to claim 8 and a processor, operatively connected to said computer readable storage means, for executing said instructions.

10. A network-enabled cloud service brokerage system for provisioning a software-based service over a cloud infrastructure including a network, the system comprising:

    - a service request interface for receiving a request for instantiation of a software-based service;
    - a processor, operatively connected to said service request interface, configured to determine performance requirements for said service and to derive cloud configuration parameters in function of said performance requirements; and
    - an infrastructure management agent, operatively connected to said processor and to a management interface of said cloud infrastructure, said infrastructure management agent being configured to configure said cloud infrastructure according to said cloud configuration parameters;
    wherein said cloud configuration parameters include network configuration parameters; and wherein configuring said cloud infrastructure includes configuring said network according to said network configuration parameters.

11. The system according to claim 10, wherein said infrastructure management agent is further configured to verify whether a performance of said network complies with said performance requirements and to send a non-compliance signal to said processor if said verifying indicates that said network does not comply with said performance requirements.

12. The system according to claim 11, wherein said processor is further configured to update said network configuration parameters in response to said non-compliance signal.

13. The system according to any of claims 11-12, further comprising a data storage, the system being configured to store an association between said derived cloud configuration parameters and results pertaining to said performance verification in a database; wherein said processor is further configured to use said stored association as input in said deriving of said cloud configuration parameters for further service instantiation requests.

14. The system according to any of claims 10-13, wherein said cloud configuration parameters comprise one or more of a number of software instances, a topological distribution of software instances, an allocation of resources to software instances, and a redundancy factor.

15. The system according to any claims 10-14, wherein said network configuration parameters comprise one or more of a bandwidth allocation, a data transmission priority scheme, and a redundancy factor.

# Figure 1

## Brokerage Platform

| Catalogue management | Self-service fulfillment | Service&User Provisioning | Authentication, Authorization & Access Control | User and Service Administration | Monitoring Reporting & Auditing | Helpdesk Ticketing & Support | Billing, Metering & Chargeback |
|---|---|---|---|---|---|---|---|

# Figure 2

ISV: Independent Software Vendor
Cloud Provider: CP
SaaS: Software as a Service
IaaS: Infrastructure as a Service
PaaS: Platform as a Service

# Figure 3

| Upload Service to N-CSB | Define service requirement to support different level QoS (e.g. bandwidth, latency, security) | Cloud resource selection: private cloud, public cloud, etc. | Generate SLA contract with cloud provider |
|---|---|---|---|

*310*     *320*     *330*     *340*

# Figure 4

**Service Ordering**    **Service Ordering**   ...   **Service Ordering** — *411*

*412*   **Brokerage platform**

Service requirement aggregation (e.g. bandwidth, latency, security, etc.)

— *410*

Network abstraction map → Network configuration → Customer network performance test   Good

*Bad*   *423*

*421*    *422*

Yes   Network upgrade recommendation   No   *424*

**Network Enablement**   — *420*

Checkout

*431* — Services with network upgrade    Services — *432*

**Brokerage platform**   — *430*

Network activation — *441*

Resource placement and Service activation — *442*   **Network Enablement** — *440*

# Figure 5

## Figure 6

```
┌──────────────────────────────────────┐
│  receive request for service instantiation │ ─── 610
└──────────────────────────────────────┘
                    ↓
┌──────────────────────────────────────┐
│    determine performance requirements  │ ─── 620
└──────────────────────────────────────┘
                    ↓
┌──────────────────────────────────────┐
│    derive cloud configuration parameters │ ─── 630
└──────────────────────────────────────┘
                    ↓
┌──────────────────────────────────────┐
│      configure cloud infrastructure    │ ─── 640
└──────────────────────────────────────┘
                    ↓
┌──────────────────────────────────────┐
│        verify network performance      │ ─── 650
└──────────────────────────────────────┘
```

690 ── store association parameters/performance

performance compliant? ─── 660

YES    NO

generate non-compliance signal ─── 670

update network configuration parameters ─── 680

## Figure 7

780

740

storage

service req. interface ─── 710

700

processor ─── 720

infrastructure management agent ─── 730

790

# EP 2 669 799 A1

<table>
<tr><td colspan="4" align="center">**EUROPEAN SEARCH REPORT**</td><td>**Application Number**<br>EP 12 30 5616</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/091056 A1 (SERVICEMESH INC [US]; PULIER ERIC [US]; MARTINEZ FRANK [US]) 28 July 2011 (2011-07-28) * abstract * * page 13, line 18 - last line * | 1-15 | INV.<br>G06F9/50 |
| A | US 2005/188088 A1 (FELLENSTEIN CRAIG [US] ET AL) 25 August 2005 (2005-08-25) * abstract * * paragraph [0015] - paragraph [0017] * * paragraph [0035] * * paragraph [0043] - paragraph [0046] * * paragraph [0065] * * paragraph [0067] * | 1-15 | |
| A | US 2008/219253 A1 (POZHENKO MIKHAIL [KR] ET AL) 11 September 2008 (2008-09-11) * abstract * * paragraph [0051] - paragraph [0054] * * paragraph [0058] * | 1-15 | |
| A | US 2006/150190 A1 (GUSLER CARL P [US] ET AL GUSLER CARL PHILLIP [US] ET AL) 6 July 2006 (2006-07-06) * abstract * * paragraph [0027] * * paragraph [0033] - paragraph [0035] * | 1-15 | TECHNICAL FIELDS SEARCHED (IPC)<br>G06F |

The present search report has been drawn up for all claims

| Place of search | Date of completion of the search | Examiner |
|---|---|---|
| The Hague | 20 July 2012 | Archontopoulos, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 30 5616

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2012

| Patent document cited in search report | | Publication date | Patent family member(s) | | Publication date |
|---|---|---|---|---|---|
| WO 2011091056 | A1 | 28-07-2011 | US | 2011231899 A1 | 22-09-2011 |
| | | | WO | 2011091056 A1 | 28-07-2011 |
| US 2005188088 | A1 | 25-08-2005 | US | 2005188088 A1 | 25-08-2005 |
| | | | US | 2009216883 A1 | 27-08-2009 |
| US 2008219253 | A1 | 11-09-2008 | KR | 20090000623 A | 08-01-2009 |
| | | | US | 2008219253 A1 | 11-09-2008 |
| US 2006150190 | A1 | 06-07-2006 | NONE | | |

EPO FORM P0459

For more details about this annex : see Official Journal of the European Patent Office, No. 12/82